# EUROPÄISCHE PATENTSCHRIFT

(11) **EP 0 732 821 B1**
(45) Veröffentlichungstag und Bekanntmachung des Hinweises auf die Patenterteilung: **07.12.2005**
(21) Anmeldenummer: 96103430.3
(22) Anmeldetag: 06.03.1996
(51) Int. Cl.: H04H 1/00, H04N 7/088

(54) **Verfahren zum Abrufen von Informationen aktueller Hörfunk- oder Fernsehsendungen**
Method for retrieving information concerning current radio and television broadcasts
Méthode pour récupérer des informations concernant des programmes de radiodiffusion et de télévision actuels

(30) Priorität: 15.03.1995 DE 19509383
(43) Veröffentlichungstag der Anmeldung: 18.09.1996
(73) Patentinhaber: DEUTSCHE THOMSON-BRANDT GMBH, 78048 Villingen-Schwenningen (DE)
(72) Erfinder: Hütter, Ingo, 29223 Celle (DE); Spille, Jens, 30966 Hemmingen (DE); Adolph, Dirk, 30952 Ronnenberg (DE); Otto-Spille, Sigrun, 30966 Hemmingen (DE)
(74) Vertreter: Wördemann, Hermes

(56) Entgegenhaltungen:
- EP-A- 0 447 968
- DE-A- 4 113 918

## Beschreibung

Bei der Vielzahl der über Kabel und Satelliten empfangbaren Programme ist es für einen Hörfunk- oder Fernsehteilnehmer umständlich, sich beim Durchsuchen der Kanäle nach einer für ihn interessant erscheinenden Sendung Programm-Informationen der gerade laufenden Sendung zu beschaffen. Möchte er z. B. Titel, Anfangszeit, Restzeit oder Schlußzeit der laufenden Sendung wissen, so müßte er dazu entweder Programmzeitungen studieren oder Schritt für Schritt mehrere Videotext-Seiten durchblättern und lesen, deren Seitennummern von Sendeanstalt zu Sendeanstalt variieren können. Beim Betrachten von Videotext-Seiten ist normalerweise das Fernsehbild einer laufenden Sendung nicht sichtbar und müßte durch Betätigen einer weiteren Taste der Fernbedienung dem Videotext unterlegt werden, um die Sendung parallel zum Videotext verfolgen zu können. Dadurch verschlechtert sich aber die Lesbarkeit der Videotext-Seiten.

Zum Inhalt dieser Programm-Informationen, sowie zu deren Übertragung, Dekodierung und Anzeige sind verschiedene Methoden bekannt. So offenbart EP 0447 968, dass die gewünschten Daten automatisch aus den Programmseiten des Videotextes gewonnen und beim Umschalten des Programms dargestellt werden können.
DE 41 13 918 und DE 35 27 939 offenbaren, auf welche Weise die notwendigen, den Sendebeitrag charakterisierenden Signale übertragen und empfängerseitig dekodiert werden können.

Der Erfindung liegt die Aufgabe zugrunde, diese Informationen zu aktuellen Hörfunk- oder Fernsehsendungen einfacher und gezielter abrufbar zu machenund zur Anzeige zu bringen.

Diese Aufgabe wird bei einem Verfahren nach dem Oberbegriff des Anspruchs 1 durch die im Kennzeichen angegebenen Merkmale gelöst.

Bei den Zusatzinformationssignalen kommen derzeit die Videotext- und VPS-Signale bei Fernsehsignalen und RDS-Signale bei Hörfunksignalen in Frage. Die Videotextsignale enthalten auf bestimmten Seiten die Anfangszeiten und die Titel der Sendungen sowie die VPS-Zeiten, sofern diese von den tatsächlichen Zeiten abweichen. Durch die identischen Seiten sind Titel und Zeitinformation einer Sendung unmittelbar miteinander verknüpft. Darüber hinaus gibt es im Videotext auch mittelbar verknüpfte Informationen, wenn neben dem Titel noch weitere Seiten angegeben sind, die ergänzende Informationen zur Sendung enthalten.

Die aktuelle Zeit kann entweder aus einer geräteeigenen Uhr ermittelt werden oder bei Fernsehsignalen aus der mit dem Videotextsignal übertragenen aktuellen Zeit. Einer aktuellen Sendung können auch andere Zeiten als die aktuelle Zeit zugeordnet sein, z. B. durch das VPS-Signal, durch welches der laufenden Sendung eine spezielle Uhrzeit zugeordnet ist, unabhängig davon, zu welcher Zeit die Übertragung tatsächlich erfolgt.

Durch die erfindungsgemäßen Maßnahmen gelingt es, aus der Fülle der in den Zusatzinformationssignalen enthaltenen Informationen diejenigen auszufiltern und darzustellen, welche sich auf die aktuelle Sendung und/oder nachfolgende Sendungen beziehen.

Ähnliche Zusatzinformationen, wie sie bei Fernsehsendungen bereits übertragen werden, werden auch bei Hörfunksendungen übertragen oder lassen sich durch Kodierung noch bisher unbelegter Bits der Zusatzinformationssignale realisieren. Gleiches gilt auch für Zusatzinformationen, wie sie im digitalen Hörfunk (DAB oder DSS) übertragen werden oder übertragen werden können.

Dem Hörfunk- oder Fernsehteilnehmer ist es dadurch möglich, in einfacher Weise durch Betätigen einer speziell für derartige Informationen vorhandene Taste die aktuellen Informationen zu einer laufenden oder nachfolgenden Sendung aufzurufen, ohne daß er beispielsweise bei Fernsehsendungen die Videotexttafeln durchblättern und lesen muß. Die Bedienung ist dadurch so vereinfacht, daß es auch ungeübten Benutzern ohne Studieren der Bedienungsanleitung des entsprechenden Gerätes gelingt, sich diese Informationen zu verschaffen.

Wird der vorgegebene Zeitbereich so festgelegt, daß er durch die der aktuellen Zeit und/oder der einer aktuellen Sendung zugeordneten Zeit unmittelbar benachbarten Zeitinformationen der Zusatzinformationssignale begrenzt wird, so lassen sich alle Informationen einer laufenden Sendung eindeutig aus den Gesamtinformationen ausfiltern und zur Anzeige bringen.

Bei einer anderen Alternative, bei der der vorgegebene Zeitbereich einerseits durch die unmittelbar vor der aktuellen Zeit liegende Zeitinformation oder durch die einer aktuellen Sendung zugeordnete Zeit und andererseits durch die beiden unmittelbar nach der aktuellen Zeit liegenden Zeitinformationen begrenzt wird, es können neben den Informationen über die aktuelle Sendung auch die Informationen über eine nachfolgende Sendung vollständig zur Anzeige gebracht werden.

Eine dritte Alternative sieht schließlich vor, daß der Zeitbereich einerseits durch die unmittelbar vor der aktuellen Zeit liegende Zeitinformation oder durch die einer aktuellen Sendung zugeordnete Zeit und andererseits durch eine feste Zeitspanne nach der aktuellen Zeit begrenzt wird.

Dadurch lassen sich neben den Informationen der aktuellen Sendung auch die Informationen von Sendungen zur Anzeige bringen, die innerhalb der festen Zeitspanne beginnen. Dies kann vorteilhaft sein, wenn der aktuellen Sendung zuerst mehrere kurze Programmbeiträge vor einem längeren Programmbeitrag folgen. Bei der vorgenannten Alternative würde nämlich der längere Programmbeitrag nicht angezeigt.

Vorzugsweise werden die Informationen derart zur Anzeige gebracht, daß nach einer ersten Tastenbetätigung wenigstens die Anfangszeit, der Titel der Sendung und die Restlaufzeit angezeigt werden. Nach einer zweiten Tastenbetätigung, die innerhalb einer vorgegebenen Zeitspanne auf die erste Tastenbetätigung erfolgt, kann eine Programmbeschreibung zum laufenden Programm angezeigt werden. Nach einer dritten Tastenbetätigung, die innerhalb einer vorgegebenen Zeitspanne auf die zweite Tastenbetätigung erfolgt, kann schließlich die Anfangszeit und der Titel der nachfolgenden Sendung oder Sendungen angezeigt werden.
Dadurch ist es möglich, den Umfang der jeweils angezeigten Informationen so gering wie möglich zu halten, um z.B. bei der Darstellung auf einem Fernsehbildschirm das laufende Programm ohne zu große Beeinträchtigung weiterverfolgen zu können oder bei Darstellung auf dem Display einer Fernbedienung oder des Empfangsgerätes mit einfachen Anzeigeelementen auszukommen. Die Zeitabstimmung der aufeinanderfolgenden Tastenbetätigungen ist zweckmäßig, um mit einer einzigen Taste auszukommen und z. B. nach Überschreiten der vorgegebenen Zeit und erneutem Betätigen der Taste wieder die erste Information darstellen zu können.

Eine Weiterbildung sieht vor, daß die Zusatzinformationssignale aller empfangbaren oder programmierten Sendeanstalten nacheinander abgefragt werden und durch weiteres Betätigen derselben oder durch ein- oder mehrmaliges Betätigen einer weiteren Abruftaste diese Informationen auf der Anzeigevorrichtung als Tabelle dargestellt werden.

Der Hörfunk- oder Fernsehteilnehmer erhält dann auf einen Blick die Informationen zu aktuell laufenden Programmen und kann daraufhin gezielt das ihn interessierende Programm wählen. Er erspart sich damit das Umschalten von einem zum anderen Programm und die jeweils gesonderte Abfrage der aktuellen Informationen zu dem dort laufenden Programm.

Besitzt das Empfangsgerät nur ein Empfangsteil, so können die Informationen der empfangbaren oder programmierten Sendeanstalten im Stand-By-Zustand abgefragt und ständig aktualisiert werden, so daß sie beim Schalten des Empfangsgerätes vom Stand-By-Zustand in den Betriebszustand sofort zur Verfügung stehen. Im laufenden Betrieb müßten diese Informationen dann aber durch Unterbrechen des gerade empfangenen Programms gesondert abgetastet werden. In diesem Fall würde der Teilnehmer zunächst eine leere Tabelle sehen, die nach und nach mit Informationen gefüllt wird. Besitzt das Gerät dagegen einen zusätzlichen Empfangsteil, so können die Informationen der übrigen Sendeanstalten ständig aktualisiert werden, so daß sie beim Abruf jederzeit zur Verfügung stehen und keine Wartezeiten eintreten.

Weiterhin kann vorgesehen sein, daß zusätzlich übertragene Informationen der Programm-Kategorie ausgewertet und die anzuzeigenden Informationen nach Programm-Kategorien sortiert oder selektiert werden und als mehrseitige Tabelle durch wiederholtes Betätigen der Abruftaste Seite für Seite nacheinander dargestellt werden.

Diese Weiterbildung gestattet es, die Informationen einer Vielzahl empfangbarer Programme übersichtlicher darzustellen und dem Teilnehmer damit die gezielte Auswahl des ihn interessierenden Programms zu erleichtern.

Schließlich ist vorgesehen, daß bei nicht verfügbaren oder nicht dekodierbaren Zusatzinformationssignalen ein Hinweistext oder eine Bedienungsanleitung dargestellt wird. Dies hilft dem Teilnehmer zu erkennen, ob ein Bedienungsfehler oder eine Störung vorliegt.

Im folgenden wird die Erfindung anhand von Figuren erläutert. Darin zeigen:

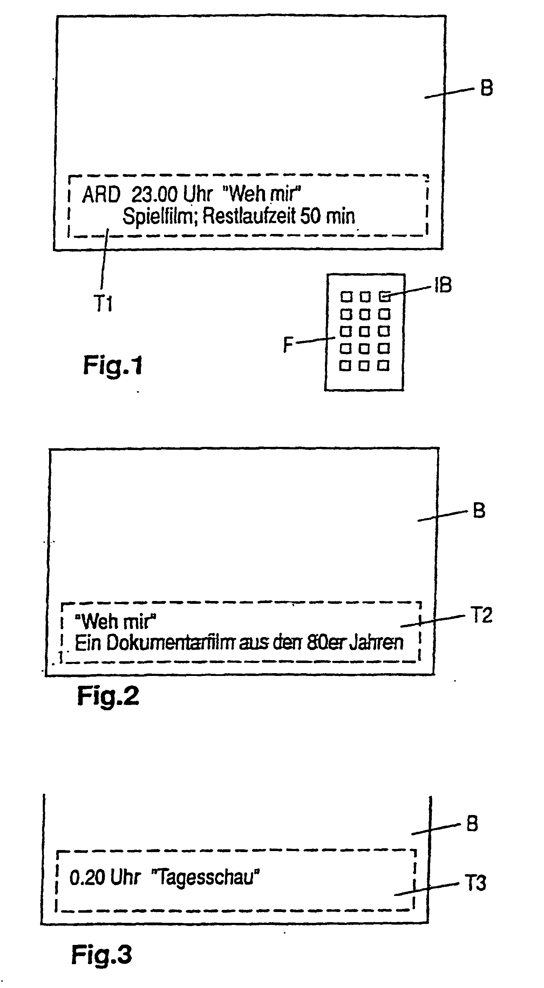

Fig. 1 - 3 erfindungsgemäße Bildschirmdarstellungen.

Fig. 1 zeigt den Bildschirm B mit der Einblendung des Textes T1 in das dargestellte Programm, nachdem auf der Fernbedienung F die Informationstaste IB erstmals gedrückt wurde.

Fig. 2 zeigt den Bildschirm B mit dem Text T2, der nach, weiterem Drücken der Informationstaste IB in das gerade dargestellte Programm eingeblendet ist.

Fig. 3 zeigt einen Teil des Bildschirmes B, mit dem Text T3, der nach wiederholtem Drücken der Informationstaste in das gerade dargestellte Programm eingeblendet ist und die Anfangszeit sowie den Titel der nachfolgenden Sendung enthält.

Nachfolgend wird die Erfindung an zwei Situationsbeispielen erläutert.

### Beispiel 1:

Ein Fernsehteilnehmer schaltet am Mittwoch, den 08.02.1995 um 23.30 Uhr sein Gerät ein und wählt die Sendeanstalt "ARD". Ein nach dem erfindungsgemäßen Verfahren arbeitendes Programm eines geräteeigenen Mikrocomputers ermittelt nun aus den mit dem Nutzsignal übertragenen Zusatzinformationssignalen Videotextseiten, die Zeitangaben unmittelbar vor und unmittelbar nach der aktuellen Zeit aufweisen. Dabei werden die Zeiten 23.00 Uhr verknüpft mit dem Sendungstitel "Weh mir" und 0.20 Uhr verknüpft mit dem Sendungstitel "Tagesschau" aufgefunden. Zusätzlich ermittelt das Programm, daß zu dem Sendungstitel "Weh mir" noch eine weitere Videotextseite existiert, die eine Inhaltsangabe dieses Spielfilms umfaßt. Diese Informationen werden nun intern gespeichert.
Möchte der Fernsehteilnehmer wissen, was gerade läuft, so betätigt er eine spezielle Info-Taste an der Fernbedienung seines Gerätes und auf dem Bildschirm wird folgende Information eingeblendet:
<23.00 Uhr "Weh mir", Spielfilm, Restlaufzeit 50 Minuten>. Betätigt der Fernsehteilnehmer die Info-Taste während der Informationsanzeige ein zweites mal, so wird die Programmbeschreibung eingeblendet. Bei nochmaliger Betätigung der Info-Taste wird die Anfangszeit und der Titel der nachfolgenden Sendung angezeigt, nämlich
<0.20 Uhr "Tagesschau">.
Die eingeblendeten Informationen verschwinden automatisch nach einer voreingestellten Zeit, die üblicherweise zum Lesen ausreicht. Wird die Info-Taste betätigt, wenn die Informationen vom Bildschirm verschwunden sind, so wird wieder die erste Information angezeigt und dabei die Restlaufzeit korrigiert.

Durch die erfindungsgemäße Maßnahme wird der Abruf der aktuellen Informationen erheblich vereinfacht, denn der Fernsehteilnehmer muß nicht die bei der Seitennummer 300 beginnenden Seiten einzeln abfragen und dabei die Wartezeit abwarten, die bei der seriellen Datenübertragung der Videotextseiten auftritt.

### Beispiel 2:

Der Fernsehteilnehmer benutzt ein Gerät, in dem eine modifiziertes Programm nach der Erfindung einen Mikrocomputer in der Weise steuert, daß im Stand-By-Zustand die Zusatzinformationssignale sämtlicher empfangbarer Sendeanstalten abgetastet und die daraus gewonnenen Informationen zwischengespeichert werden. Wird das Gerät zur gleichen Zeit, wie im Beispiel 1, eingeschaltet und eine Tabellen-Info-Taste betätigt, die die aktuellen Informationen sämtlicher empfangbarer Sendeanstalten nach Programm-Kategorien in Tabellenform darstellt, so wird beispielsweise bei einer ersten Betätigung dieser Taste die Kategorie "Spielfilm" gezeigt mit folgendem Inhalt:
<ARD 23.00 Uhr "Weh mir" Restlaufzeit 50 Minuten>
<SAT 1 23.00 Uhr "Bridge to Hell" Restlaufzeit 1 Stunde 10 Minuten>
<PRO 7 23.00 Uhr "The Drifter" Restlaufzeit 1 Stunde 10 Minuten>
<RTL 2 23.00 Uhr "Die gelben Teufel von Los Angeles" Restlaufzeit 1 Stunde>.

Bei einer zweiten Betätigung der Tabellen-Info-Taste werden z. B. alle Sendungen dargestellt, die in die Kategorie "Serien" fallen. Es erscheint dann:
<ZDF 23.00 Uhr "Derrick" Restlaufzeit 30 Minuten>.

Bei weiteren Tastenbetätigungen werden dann Sendungen angezeigt, die in andere Programm-Kategorien fallen, z. B. Shows, Sport, Nachrichten, politische Magazine, wissenschaftliche Beiträge und ähnliches.

In diesem Fall ist es unwichtig, welche aktuelle Sendeanstalt beim Einschalten des Gerätes gewählt wird. Die aktuellen Programme aller Sendeanstalten ermöglicht dem Fernsehteilnehmer, ohne schrittweises Umschalten auf die einzelnen Sendeanstalten und Durchsuchen der Videotextseiten nach Programminformationen die für eine Programmentscheidung wichtigen Informationen auf einen Blick zu erfassen.

Bei einer Weiterbildung der Erfindung werden die Daten nicht von einer Sendeanstalt genommen, sondern von einem zuführbaren Speichermedium. Dieses Speichermedium könnte sein eine CD-ROM, eine Diskette, eine MOD oder sonstige Speicherträger. Es ist somit möglich den Abruf der Informationen auch von diesen Speichermedien zu ermöglichen. Die Speichermedien dienen vorzugsweise auch als eine Art TV Zeitschrift auf Nicht-Papier-Basis.

Auch ist es möglich die empfangenen Daten auf ein obengenanntes Speichermedium abzuspeichern um einen schnellen oder dauerhaften Zugriff zu ermöglichen, oder die Daten zu archivieren oder zu verarbeiten.

## Patentansprüche

1. Verfahren zum Abrufen von Informationen aktueller Hörfunk- oder Fernsehsendungen, bei denen die Nutzsignale zusammen oder getrennt mit dekodierbaren Zusatzinformationssignalen empfangen werden, wobei aus den Zusatzinformationssignalen diejenigen Informationen selektiert werden, die mit einer Zeitinformation verknüpft sind, und die selektierten Informationen mit einem vorgebbaren Zeitbereich, in den die aktuelle Zeit und/oder die einer aktuellen Sendung zugeordnete Zeit fällt, verglichen und auf Abruf angezeigt werden, **dadurch gekennzeichnet, dass** nach erstmaligem Betätigen einer Abruftaste eines zugehörigen Empfangsgerätes oder dessen Fernbedienung die abgerufenen Informationen den Titel der aktuellen Sendung umfassen, und dass nach wiederholtem Betätigen derselben Taste innerhalb eines vorgegebenen Zeitraums weitere Information zur aktuellen Sendung und/oder zu anderen Sendungen abgerufen und auf einem Fernsehbildschirm angezeigt werden.

2. Verfahren nach Anspruch 1, weiter **dadurch gekennzeichnet, dass** die Informationen, die nach dem wiederholten Betätigen der Abruftaste innerhalb des vorgegebenen Zeitraums abgerufen werden, eine Beschreibung der aktuellen Sendung oder die Anfangszeit oder den Titel der nachfolgenden Sendung enthalten.

3. Verfahren nach Anspruch 1 oder 2, weiter **dadurch gekennzeichnet, dass** die nach erstmaligem Betätigen der Abruftaste dargestellten Informationen die Titel der jeweils aktuellen Sendungen aller empfangbaren oder programmierten Sendeanstalten enthalten, sofern die Sendungen einer bestimmten gemeinsamen Kategorie angehören.

4. Verfahren nach Anspruch 3, weiter **dadurch gekennzeichnet, dass** die Informationen, die nach dem wiederholten Betätigen der Abruftaste innerhalb der vorgegebenen Zeit nach dem vorherigen Betätigen abgerufen werden, die Titel der jeweils aktuellen Sendungen aller empfangbaren oder programmierten Sendeanstalten enthalten, sofern die Sendungen einer bestimmten anderen gemeinsamen Kategorie angehören.

5. Verfahren nach Anspruch 1 oder 2, weiter **dadurch gekennzeichnet, dass** die nach erstmaligem Betätigen der Abruftaste dargestellten Informationen die Anfangszeit oder die Kategorie oder die Restlaufzeit der aktuellen Sendung enthalten.

## Claims

1. Method for calling up information about current radio or television programmes, in the case of which the wanted signals are received together or separately with decodable auxiliary information signals, whereby information which is linked to time information is selected from the auxiliary information signals and the selected information is compared with a time period which can be predetermined and in which the current time and/or the time assigned to the current programme occurs, and is displayed upon request, **characterized in that** after a first operation of a call-up key of an associated receiving device or its remote control the called-up information comprises the title of the current programme, and that after the repeated operation of the same key within a predetermined time period further information with regard to the current programme and/or to other programmes is called up and displayed on a display device.

2. Method according to claim 1, further **characterized in that** the information, which is called-up after repeatedly operating the call-up key within the predetermined time period, contains a description of the current programme, or the start time or the title of the succeeding programme.

3. Method according to claim 1 or 2, further **characterized in that** the information displayed after the first operation of the call-up key contains the titles of each current programme of all receivable or programmed broadcasting authorities, provided that the programmes belong to a certain joint category.

4. Method according to claims 3, further **characterized in that** the information, which is called-up after repeatedly operating the call-up key within the predetermined time period after the preceding operation, contains the titles of each current programme of all receivable or programmed broadcasting authorities, provided that the programmes belong to another certain joint category.

5. Method according to claim 1 or 2, further **characterized in that** the information displayed after the first operation of the call-up key contains the start time or the category or the remaining running time of the current programme.

## Revendications

1. Procédé de consultation des informations d'émissions de radio ou de télévision actuelles, dans lesquelles les signaux utiles, séparés de ou associés à des signaux d'informations supplémentaires décodables, sont reçus, où les informations qui sont associées à une information temporelle sont sélectionnées à partir des signaux d'informations supplémentaires, et les informations sélectionnées sont comparées à un domaine temporel prédéterminable dans lequel se situe l'heure actuelle et/ou l'heure classée dans une émission actuelle, et rendues disponibles pour affichage, **caractérisé en ce qu'**après une première activation d'une touche d'appel d'un appareil de réception adéquat ou de sa télécommande, les informations consultées comprennent le titre de l'émission actuelle, et **en ce qu'**après une activation répétée de cette même touche pendant une période prédéterminée, d'autres informations concernant l'émission actuelle et/ou d'autres émissions sont consultées et affichées sur un dispositif indicateur.

2. Procédé selon la revendication 1, **caractérisé en outre en ce que** les informations qui sont consultées suite à l'activation répétée de la touche d'appel pendant la période prédéterminée contiennent une description de l'émission actuelle ou l'heure de début ou le titre de l'émission suivante.

3. Procédé selon la revendication 1 ou 2, **caractérisé en outre en ce que** les informations affichées suite à une première activation de la touche d'appel contiennent les titres des émissions actuelles respectives de toutes les chaînes de programmes réceptionnables ou programmées, dans la mesure où les émissions appartiennent à une catégorie commune déterminée.

4. Procédé selon la revendication 3, **caractérisé en outre en ce que** les informations qui sont consultées suite à l'activation répétée de la touche d'appel pendant la période prédéterminée après l'activation précédente contiennent les titres des émissions actuelles respectives de toutes les chaînes de programmes réceptionnables ou programmées, dans la mesure où les émissions appartiennent à une autre catégorie commune déterminée.

5. Procédé selon la revendication 1 ou 2, **caractérisé en outre en ce que** les informations affichées suite à une première activation de la touche d'appel contiennent l'heure de début ou la catégorie ou le temps restant de l'émission actuelle.
